# EUROPÄISCHE PATENTANMELDUNG

(11) **EP 4 130 935 A1**
(43) Veröffentlichungstag der Anmeldung: **08.02.2023**
(21) Anmeldenummer: 21189889.5
(22) Anmeldetag: 05.08.2021
(51) Int. Cl.: G06F 1/28, G06F 1/30, H04R 1/00

(54) **ELEKTRONISCHES GERÄT MIT EINER STATUSMITTEILUNG BEI UNTERBRECHUNG SEINER STROMVERSORGUNG**

(71) Anmelder: Austrian Audio GmbH, 1230 Wien (AT)
(72) Erfinder: Kofler, Heinrich, 1100 Wien (AT); Kaspar, Alexander, 1100 Wien (AT); Castiglione, Paolo, 1040 Wien (AT)
(74) Vertreter: Patentanwälte Barger, Piso & Partner

(57) **Zusammenfassung**

Die Erfindung betrifft ein elektronisches Gerät (1) mit einem E-Paper Display (4). Im Falle einer Unterbrechung der Stromversorgung (2) des Geräts (1) wird dieses erfindungsgemäß über einen implementierten Kurzzeitenergiespeicher (5) mit ausreichend elektrischer Energie versorgt, um eine Aktualisierung des E-Paper Displays (4) vorzunehmen, nachdem die Unterbrechung der Stromversorgung von einer Steuerungseinheit (3) erkannt wurde.

## Beschreibung

Die Erfindung betrifft ein Elektronisches Gerät mit einem E-Paper Display und einer Stromversorgung entsprechend dem Oberbegriff des Anspruches 1.

Elektronische Geräte weisen oft besondere Einstellungen auf, die die bedienende Person nach Möglichkeit jederzeit kennen möchte. Hierfür gibt es mehrere Lösungsmöglichkeiten. Für komplexere Aufgabenstellungen kommen aufgrund der Fülle an Informationen meist nur Displaylösungen in Betracht. Diese können beispielsweise als LED- oder E-Paper Displays ausgeführt sein.

Beispiele für Geräte, die über ein Display verfügen gibt es zahllose. Von modernen Mobiltelefonen (LED-Display) bis hin zu E-Book Readern (E-Paper). Aufgrund des geringeren Stromverbrauchs und der Tatsache, dass einmal dargestellte Informationen bis zu einer Änderung erhalten bleiben, bieten sich für mobile Anwendungen, die keine hohen Anforderungen an die Farbgenauigkeit der Informationswidergabe stellen E-Paper Displays an. So lange das Gerät normal in Betrieb ist erfüllen die Displays ihre Aufgabe im Allgemeinen zuverlässig. Wird das Gerät ausgeschalten, so zeigt es, je nach Einstellung, gar keine Informationen an, oder die zuletzt dargestellte.

E-Paper Displays sind schon lange in unterschiedlichen Anwendungsfällen bekannt, etwa aus der US 2008/0043317 A1. Der Inhalt dieser Veröffentlichung wird für die Jurisdiktionen, in denen es möglich ist, durch Bezugnahme zum Inhalt der vorliegenden Anmeldung gemacht.

Die WO 00/67110 zeigt ein sehr frühes Anwendungsbeispiel, bei dem ein E-Paper Display als Preis- oder Informationsschild an einem Supermarktregal verwendet wird. Nach einem einmaligen Einspielen der Information auf das Display bleibt diese erhalten, auch wenn das Display nichtmehr mit Strom versorgt wird. Der Inhalt dieser Veröffentlichung wird für die Jurisdiktionen, in denen es möglich ist, durch Bezugnahme zum Inhalt der vorliegenden Anmeldung gemacht.

Als Erweiterung dieses Prinzips beschreibt das wissenschaftliche Paper "Wirelessly Powered Bistable Display Tags" von Artem Dementyev et. all. (http://www.alansonsample.com/publications/docs/2013%20-%20UbiComp%20-%20Wirelessly%20Powered%20Bistable%20Display%20Tags.pdf) die Möglichkeit die Informationen eines E-Paper Displays ohne eigene Energiequelle mittels NFC-fähigem Handy über einen induktiven Link zu ändern. Der Inhalt dieser Veröffentlichung wird für die Jurisdiktionen, in denen es möglich ist, durch Bezugnahme zum Inhalt der vorliegenden Anmeldung gemacht.

Es gibt nun Anwendungsfälle, in denen die betreffenden Informationen nicht, oder nicht vollständig laufend auf dem Display angezeigt werden sollen. Ein Beispiel dafür sind Störungsmeldungen. Ein anderer Fall sind Situationen, in denen sich die Daten laufend ändern, das Display aber aus Gründen der Energieeffizienz nur in regelmäßigen Abständen aktualisiert wird, etwa beispielsweise bei einem Mikrofon die Mute-Funktion aktiviert wird, die Clipping-Anzeige, oder Anzeige der Sendeleistung. Solche Anwendungsbereiche sind zahlreich. In solchen Fällen zeigen die verwendeten E-Paper Displays im Fall eines plötzlichen Wegfalls der Stromversorgung keine, oder veraltete Informationen an. Es bleibt der bedienenden Person dann nichts anderes übrig, als das Gerät mit den letzten bekannten Systemparametern zu beschriften.

Ein Beispiel hierfür ist die Sendefrequenz eines tragbaren Mikrofons. Dieses Vorgehen ist doppelt fehleranfällig, da einerseits menschliches Versagen bei der Beschriftung auftreten kann, andererseits aber auch der tatsächliche Status unbekannt sein kann. Alternativ kann der Benutzer bei drahtlosen Mikrofonen dieses häufig einschalten, indem er eine spezielle Tastenkombination drückt, um in einen "sicheren" Modus zu gelangen, in dem die Hochfrequenzübertragung deaktiviert ist. In diesem Modus kann der Benutzer vom Display die wichtigen Informationen abrufen, die erforderlich sind, bevor er die Entscheidung trifft, das Radio ein- oder auszuschalten. Diese Alternative ist jedoch zeitaufwendig, kostet Energie und ist nicht bei allen Geräten möglich.

Es besteht somit der Bedarf an einem selbst aktualisierenden E-Paper Display, das bei plötzlichem Verlust der Energieversorgung des das E-Paper Display enthaltenden elektrischen Geräts, relevante Statusinformationen über das elektronische Gerät anzeigt und diese bis zur neuerlichen Inbetriebnahme des Geräts beibehält.

Erfindungsgemäß wird dieses Ziel durch eine Vorrichtung gemäß dem kennzeichnenden Teil des Anspruchs 1 erreicht. Mit anderen Worten wird, bei einem plötzlichen Wegfall der Primärenergiequelle eines elektrischen Geräts, aus einem integrierten Kurzzeitenergiespeicher ausreichend elektrische Energie zur Verfügung gestellt, um die in einer ebenfalls integrierten Steuerungseinheit abgelegten Statusinformationen des Geräts auf einem E-Paper Display des Geräts darzustellen.

Die Erfindung soll nachfolgend anhand von Figuren näher erläutert werden. Dabei zeigt
die Fig. 1 einen schematischen Aufbau eines erfindungsgemäßen elektronischen Geräts und
die Fig. 2 einen detaillierten Blockschaltungsaufbau eines erfindungsgemäßen elektronischen Geräts.

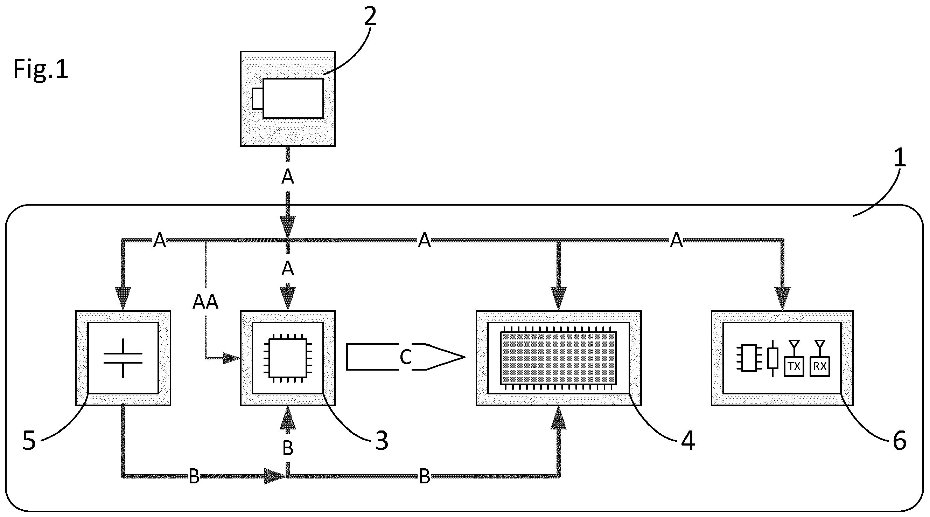

Fig. 1 zeigt den schematischen Aufbau eines erfindungsgemäßen elektronischen Geräts 1 mit einer Energiequelle 2, eine Steuerungseinheit 3, einem E-Paper Display 4, einem Kurzzeitenergiespeicher 5 und sonstiger, nicht näher dargestellter, für den Betrieb des Geräts 1 nötigen Elektronik 6. Während des Normalbetriebs versorgt die Primärenergiequelle 2 über die Versorgungswege A alle Bereiche des elektronischen Geräts 1 mit elektrischer Energie. Das bedeutet, so lange die Primärenergiequelle 2 zur Verfügung steht, erfolgt auch eine Aufladung des Kurzzeitenergiespeichers 5 und die Steuerungseinheit 3 wird mit Energie versorgt, der seinerseits laufend aktualisierte Daten über die Digitalschnittstelle C an das E-Paper Display 4 liefern kann, wenn das gewünscht ist. Fällt die Primärenergieversorgung 2 nun überraschend weg, etwa durch ein Unterbrechen der für den Betrieb des Geräts notwendigen Stromleitung, oder plötzliches Entfernen der das Gerät 1 betreibenden Batterie, so werden die Steuerungseinheit 3 und das E-Paper Display 4 umgehend vom Kurzzeitenergiespeicher 5 über die Versorgungswege B mit elektrischer Energie versorgt. Die übrige für den regulären Betrieb des Geräts 1 nötige Elektronik 6 wird nicht mit ausreichend Energie versorgt, um den Normalbetrieb fortzusetzen. Registriert die Steuerungseinheit 3 ein Wegfallen der Energiebereitstellung über den Versorgungsweg A aus der Primärenergieversorgung 2, so wird automatisch ein Updateprozess des E-Paper Displays 4 gestartet. Nachdem der Updateprozess des E-Paper Displays 4 beendet ist, ist es für die Steuerungseinheit 3 sicher die Energieversorgung für das Display 4 und sich selbst zu unterbrechen. Dadurch ist es möglich aktuelle Systeminformationen anzuzeigen bis das Gerät 1 und damit das Display 4 wieder über die Energieversorgung 2 mit elektrischer Energie versorgt wird.

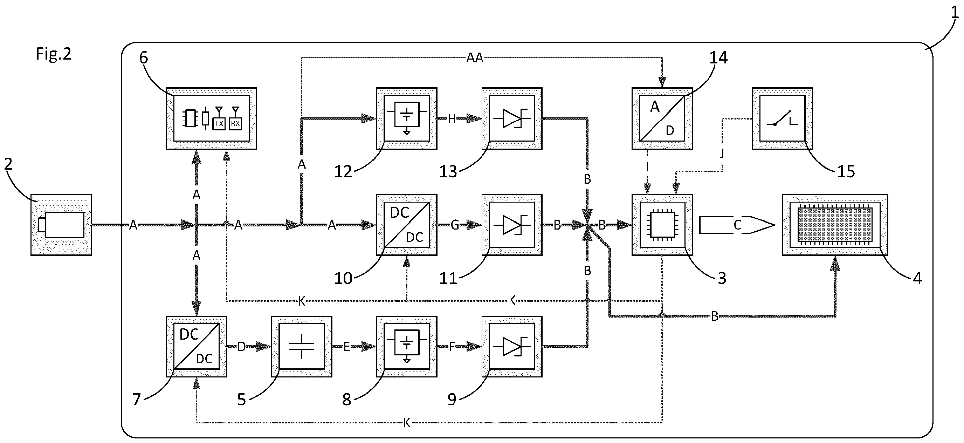

Fig. 2 zeigt den detaillierten Blockschaltungsaufbau des erfindungsgemäßen elektronischen Geräts 1 mit der Energiequelle 2, der Steuerungseinheit 3, dem E-Paper Display 4, dem Kurzzeitenergiespeicher 5 und der sonstigen, nicht näher dargestellter, für den Betrieb des Geräts 1 nötigen Elektronik 6. Weiters enthält der Aufbau einen DC-DC-Wandler 7, um die Spannung der Primärenergieversorgung 2 zum Laden des Kurzzeitenergiespeichers 5 auf einen sinnvollen Gleichstromwert umzuwandeln, einen Low-Drop-Spannungsregler (LDO) 8, eine Diode 9, einen DC-DC-Wandler 10, um die Spannung der Primärenergieversorgung 2 auf einen für die Steuerungseinheit 3 und das E-Paper Display 4 nutzbaren Gleichstromwert umzuwandeln, eine Diode 11, einen weiteren einen Low-Drop-Spannungsregler (LDO) 12, eine weitere Diode 13, ein Analog-Digital Konverter 14, die es der Steuerungseinheit 3 ermöglicht festzustellen, ob die Energieversorgung 2 weiterhin angeschlossen ist ― der Analog-Digital Konverter 14 kann auch in der Steuerungseinheit 3 integriert sein ― und einen Schalter 15, der den Schaltzustand des Geräts 1 ändern kann. Die Versorgungswege A und B sowie die Digitalschnittstelle C sind analog zu Fig. 1. AA ist eine Messstrecke die die Fähigkeit der Steuerungseinheit 3 zeigt, festzustellen, ob die Energieversorgung 2 weiterhin angeschlossen ist. Weiters ist ein Pfad K vorhanden, der die Möglichkeit der Steuerung diverser Baugruppen durch die Steuereinheit 3 ermöglicht.

Der Grund für die unterschiedlichen Versorgungspfade liegt in den unterschiedlichen Betriebszuständen und dem sich daraus ergebenden Energiebedarf. Wie bei Fig. 2 beschrieben sind der Kurzzeitenergiespeicher 5, der DC-DC-Wandler 7, die Blöcke 7, der Low-Drop-Spannungsregler (LDO) 8 und die Diode 9 für die Energiespeicherung und Zurverfügungstellung ausreichender Energie bei Wegfall der Hauptenergiequelle verantwortlich. Im regulären Betrieb unter Vorhandensein der Primärenergiequelle 2 ist der Energiebedarf der Steuereinheit 3 und des Displays 4 relativ hoch weshalb aus Wirkungsgradgründen zuerst eine geeignete Spannung mittels DCDC Konverter 10 generiert wird und über die Diode 11 die Versorgung von der Steuereinheit 3 und des Displays 4 erfolgt. Der Versorgungspfad über den LDO 12 und die Diode 13 dient der Versorgung der Steuerungseinheit 3, wenn die Energiequelle 2 zwar vorhanden ist sich das Gerät 1 aber im Abgeschalteten Zustand befindet. In diesem Betriebsmodus benötig die Steuerungseinheit 3 sehr wenig Energie, weshalb eine Aktivierung des Versorgungspfades über den DCDC Konverter 10 und die Diode 11 nicht effizient wäre. In diesem "Low Power Mode" kann z.B. zyklisch der Status der am Gerät 1 vorhandener Tasten abgefragt oder auch eine Schnittstelle nach außen überwacht werden.

Als elektronisches Gerät 1 kommen alle Geräte in Betracht, bei denen der Bedarf besteht wichtige Systeminformationen für einen Anwender auch im ausgeschalteten Zustand zugänglich zu machen. Beispiele hierfür sind Mikrofone, Transceiver, Kopfhörer, Kameras, aber etwa auch Statusdisplays, die wichtige Informationen über ein allgemeines System zur Verfügung stellen sollen. Denkbar ist jeder Fall, in dem eine Notanzeige bei Vorliegen eines Stromausfalls wichtige Informationen zur Verfügung stellen soll.

Bei der Energiequelle 2 kann es sich um jede beliebige Energiequelle von einem Akku oder einer Batterie, bis zum allgemeinen Stromnetz handeln. Mögliche Formen der Energiebereitstellung sind der Fachperson gut bekannt.

Als Steuerungseinheit 3 kommen alle Bauteile in Betracht, die in der Lage sind die gewünschten Informationen über eine hinreichend lange Zeit zu speichern, um diese an das E-Paper Display 4 zu übertragen und diesen Übertragungsvorgang steuern können. Die genaue Ausgestaltung des Bauteils ist abhängig vom Anwendungsfall von einer Fachperson leicht wählbar. In Frage kommen hierfür etwa Mikrocontroller, Field Programmable Gate Arrays (FPGA), ein Digital Signal Processor (DSP) oder ein Mikroprozessor.

Für das Display 4 eignet sich jedes handelsübliche E-Paper Display, das die Anforderung einer Erhaltung der Informationsdarstellung ohne während der Darstellung zugeführter elektrischer Energie erfüllt.

Beim Kurzzeitenergiespeicher 5 kann es sich um einen Akku, einen oder mehrere Kondensatoren, oder jede andere Form eines Energiespeichers handeln, der dafür geeignet ist die Funktion als Kurzzeitenergiespeicher zu erfüllen. Es ist beispielsweise auch möglich den Kurzzeitenergiespeicher durch entsprechende Auslegung des Schwingkreises des elektronischen Geräts 1 in Form eines RCL-Schwingkreises zu realisieren. Wichtig dabei ist lediglich, dass der Kurzzeitenergiespeicher 5 groß genug sein muss, um das einmalige Update des E-Paper Displays 4 aus der Steuerungseinheit 3 zu ermöglichen. Der Fachperson wird es im Bedarfsfall leicht fallen eine geeignete Auswahl für den jeweiligen Anwendungsfall zu treffen.

Die für den Betrieb des Geräts 1 nötigen Elektronik 6 ist anwendungsfallabhängig und ergibt sich für die Fachperson aus der Problemstellung. So wird die Elektronik 6 beispielsweise bei einem Mikrofon eine Mikrofonkapsel mitumfassen, während bei einer Digitalkamera ein Bildsensor und ein Prozessor vorhanden sein werden.

Anstelle des Analog-Digital Konverters 14 ist es auch noch möglich einen Spannungsteiler samt Komparator zu verwenden. Unterschreitet die Spannung am Versorgungspfad A gemessen über AA einen bestimmten Wert löst diese den Updateprozess aus.

Die Versorgungswege A und B sind typischerweise Kabelverbindungen, können aber beispielsweise auch induktive Kopplungen sein. Grundsätzlich lassen sich die Versorgungswege A in jeder Form realisieren, die zur Übertragung elektrischer Energie geeignet und für den Anwendungsfall brauchbar sind.

Als Digitalschnittstelle C kommen grundsätzlich alle Verbindungen in Betracht, die eine zuverlässige Übertragung der gewünschten Daten ermöglichen. Die diesbezüglichen Möglichkeiten sind vielfältig und vom Anwendungsfall abhängig. Der Fachperson sind unterschiedliche Möglichkeiten in Abhängigkeit vom Anforderungsprofil bekannt.

Der Pfad K ist je nach Gebrauchsfall eine Kabel- oder sonstige Datenverbindungen, die die Möglichkeit der Steuerung diverser Baugruppen durch die Steuereinheit 3 ermöglicht. Der Pfad K könnte aus einer Leitung oder einem Steuerungsbus bestehen. Damit wäre es z.B. möglich bei Vorhandensein der Hauptenergiequelle 2 den Kurzzeitenergiespeicher 5 aufzuladen ohne dass das Gerät 1 für den Anwender ersichtlich in Betrieb geht. Im Zuge dessen wäre die Aktivierung der Elektronik 6 unerwünscht. Auch könnte damit beispielsweise ein Betrieb des Gerätes 1 in einem Stand-By Mode realisiert werden. Im Falle eines Senders könnten beispielsweise alle bis auf die für das Senden von Daten erforderlichen Baugruppen in Betrieb sein.

**Bezugszeichenliste:**

| | |
|---|---|
| 1 elektronisches Gerät | 12 Low-Drop-Spannungsregler (LDO) |
| 2 Primärenergiequelle | 13 Diode |
| 3 Steuerungseinheit | 14 Analog-Digital Konverter |
| 4 E-Paper Display | 15 Schalter |
| 5 Kurzzeitenergiespeicher | |
| 6 Geräteelektronik | A Versorgungsweg |
| 7 DC-DC-Wandler | B Versorgungsweg |
| 8 Low-Drop-Spannungsregler (LDO) | C Digitalschnittstelle |
| 9 Diode | K Steuerungspfad |
| 10 DC-DC-Wandler | AA Messstrecke |
| 11 Diode | |

## Patentansprüche

1. Elektronisches Gerät (1) mit einem E-Paper Display (4), einer Stromversorgung (2) und einer Steuerungseinheit (3), **dadurch gekennzeichnet, dass** das elektronische Gerät (1) einen Kurzzeitenergiespeicher (5) enthält, der die Steuerungseinheit (3) sowie das E-Paper Display (4) im Falle einer Unterbrechung der Stromversorgung (2) mit ausreichend elektrischer Energie versorgt, um eine Aktualisierung des E-Paper Displays (4) vorzunehmen, nachdem die Unterbrechung der Stromversorgung (2) von der Steuerungseinheit (3) erkannt wurde.

2. Elektronisches Gerät (1) nach Anspruch 1, **dadurch gekennzeichnet, dass** die Stromversorgung über einen Versorgungsweg (A) erfolgt und beim Erkennen der Unterbrechung der Stromversorgung durch die Steuerungseinheit (3) ein automatisches Update des E-Paper Displays (4) ausgelöst wird.

3. Elektronisches Gerät (1) nach Anspruch 1 oder 2, **dadurch gekennzeichnet, dass** der Kurzzeitenergiespeicher (5) durch entsprechende Auslegung des internen Schwingkreises des elektronischen Geräts (1) realisiert wird.

4. Elektronisches Gerät (1) nach einem der Ansprüche 1 bis 3, **dadurch gekennzeichnet, dass** die Steuerungseinheit (3) einen Analog-Digital Konverter (14) nutzt, um die Unterbrechung der Stromversorgung (2) zu detektieren.

5. Elektronisches Gerät (1) nach Anspruch 4, **dadurch gekennzeichnet, dass** der Analog-Digital Konverter (14) in der Steuerungseinheit (3) integriert ist.

6. Elektronisches Gerät (1) nach einem der Ansprüche 1 bis 5, **dadurch gekennzeichnet, dass** das elektronische Gerät (1) ein Mikrofon ist.

7. Elektronisches Gerät (1) nach einem der Ansprüche 1 bis 5, **dadurch gekennzeichnet, dass** das elektronische Gerät (1) ein Transceiver ist.

8. Elektronisches Gerät (1) nach einem der Ansprüche 1 bis 7, **dadurch gekennzeichnet, dass** die Steuerungseinheit (3) ein Mikrocontroller oder ein Mikroprozessor oder Field Programmable Gate Arrays (FPGA) oder ein Digital Signal Processor (DSP) ist.
